(19) Europäisches Patentamt
European Patent Office
Office européen des brevets

(11) **EP 3 198 235 B1**

(12) **EUROPÄISCHE PATENTSCHRIFT**

(45) Veröffentlichungstag und Bekanntmachung des Hinweises auf die Patenterteilung:
**07.08.2019   Patentblatt 2019/32**

(21) Anmeldenummer: **15771070.8**

(22) Anmeldetag: **22.09.2015**

(51) Int Cl.:
***G01D 5/244*** *(2006.01)*

(86) Internationale Anmeldenummer:
**PCT/EP2015/071704**

(87) Internationale Veröffentlichungsnummer:
**WO 2016/046194 (31.03.2016 Gazette 2016/13)**

(54) **SIGNALVERARBEITUNGSVORRICHTUNG ZUR VERARBEITUNG EINES MESSSIGNALS IN EINEM KRAFTFAHRZEUG**

SIGNAL PROCESSING DEVICE FOR PROCESSING A MEASUREMENT SIGNAL IN A MOTOR VEHICLE

DISPOSITIF DE TRAITEMENT DE SIGNAL POUR TRAITER UN SIGNAL DE MESURE DANS UN VEHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2014   DE 102014219004**

(43) Veröffentlichungstag der Anmeldung:
**02.08.2017   Patentblatt 2017/31**

(73) Patentinhaber: **Continental Teves AG & Co. OHG 60488 Frankfurt am Main (DE)**

(72) Erfinder:
• **BRÜGGEMANN, Stephan 60431 Frankfurt/Main (DE)**
• **ECKRICH, Jörg 65201 Wiesbaden (DE)**
• **STÄHLIN, Ulrich 65760 Eschborn (DE)**

(56) Entgegenhaltungen:
DE-A1-102007 042 979   DE-A1-102012 216 155
DE-T2- 60 211 380   DE-T2- 60 211 380
DE-T2- 69 503 291   US-A1- 2009 048 736
US-A1- 2012 210 791

## Beschreibung

Die vorliegende Erfindung betrifft eine Signalverarbeitungsvorrichtung zur Verarbeitung eines Messsignals in einem Kraftfahrzeug.

US 2009/048736 A1 offenbart ein Lenksystem eines Fahrzeugs, bei dem ein Sensor ein Lenkpositionssignal erzeugt. Das Sensorsignal bildet bei der Steuerung der Lenkung eines von mehreren Signalen, die mit Hilfe von Prozessoren verarbeitet werden.

US 2012/210791 A1 offenbart eine Sensoranordnung, bei der mittels Beschleunigungssensoren ein Winkel und eine Winkelgeschwindigkeit einer Welle erfasst werden können.

Ein Kraftfahrzeug mit einer aktiven Fahrwerksregelung weist häufig einen Fahrwerkspositionssensor auf, welcher einen Sensorwert bezüglich der Fahrwerksposition erfasst. Beispielsweise gibt der Sensorwert einen Winkel des Rades des Kraftfahrzeuges bezüglich eines Chassis des Kraftfahrzeuges an. Der Fahrwerkspositionssensor kann einen Signalausgang zum Ausgeben eines erfassten Sensorwertes in Form eines analogen Spannungssignals umfassen. Ferner kann der Signalausgang über eine Signalleitung mit einem elektronischen Steuergerät, wie einer Electronic Control Unit (ECU), verbunden sein, welches ausgebildet ist, einen Sensorwert aus dem analogen Spannungssignal zu extrahieren und den extrahierten Sensorwert weiterzuverarbeiten.

Hierbei umfasst das elektronische Steuergerät häufig einen Analog-Digital-Wandler zum Wandeln des analogen Spannungssignals in ein digitales Signal, aus welchem der Sensorwert extrahiert wird. Aufgrund der Analog-Digital-Wandlung, beispielsweise durch Quantisierungsfehler, aufgrund von möglichen Störungen der Übertragung des analogen Spannungssignals über die Signalleitung, beispielsweise durch elektromagnetische Störstrahlung, oder aufgrund von Laufzeiten von Filtern kann eine Genauigkeit des in dem elektronischen Steuergerät extrahierten Sensorwertes geringer als eine Erfassungsgenauigkeit des Messsensors sein.

Es ist die der Erfindung zugrundeliegende Aufgabe, ein effizienteres Konzept für eine Signalverarbeitungsvorrichtung zur Verarbeitung eines Messsignals in einem Kraftfahrzeug anzugeben.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Erfindungsgemäß wird die Aufgabe durch eine Signalverarbeitungsvorrichtung zur Verarbeitung eines Messsignals in einem Kraftfahrzeug, wobei das Messsignal eine zeitlich veränderliche Messgröße mit aufeinander folgenden Messwerten betrifft, gelöst, mit: einer ersten Signalverarbeitungseinrichtung zum Berechnen der zeitlich veränderlichen Messgröße aus dem Messsignal; einer zweiten Signalverarbeitungseinrichtung zum Verarbeiten der zeitlich veränderlichen Messgröße, um eine verarbeitete Messgröße zu erhalten; einer dritten Signalverarbeitungseinrichtung zum Berechnen einer Änderungsrate der zeitlich veränderlichen Messgröße, wobei die dritte Signalverarbeitungseinrichtung ausgebildet ist, ein Zusatzmesssignal, das die Änderungsrate anzeigt, auszugeben; und einer Kommunikationsschnittstelle, welche ausgebildet ist, die verarbeitete Messgröße und das Zusatzmesssignal zu einem zusammengesetzten Sendesignal zusammenzuführen und das zusammengesetzte Sendesignal auszusenden. Dadurch wird der Vorteil erreicht, dass das Messsignal effizient verarbeitet werden kann.

Das Kraftfahrzeug kann eine Personenkraftwagen, ein Lastkraftwagen, ein Automobil oder ein Motorrad sein. Ferner kann das Kraftfahrzeug einen Messsensor aufweisen, mittels welchem das Messsignal bereitgestellt wird. Beispielsweise ist das Kraftfahrzeug mit einer aktiven Fahrwerksregelung, einer Niveauregulierung und/oder einer automatischen Leuchtweitenregulierung ausgebildet und der Messsensor ist ein Fahrwerkspositionssensor, wie ein Höhenstandsensor. Hierbei kann ein Gehäuse des Fahrwerkspositionssensors mit einem Chassis des Kraftfahrzeuges verbunden sein. Ferner kann eine Radaufhängung oder ein Rad des Kraftfahrzeuges über ein Gestänge mit einem Hebel des Fahrwerkspositionssensors verbunden sein. Hierdurch kann mittels des Fahrwerkspositionssensors eine Bewegung und/oder ein Winkel des Rades des Kraftfahrzeuges relativ zu dem Chassis des Kraftfahrzeuges erfasst werden. Beispielsweise ist die zeitlich veränderliche Messgröße der Winkel des Rades des Kraftfahrzeuges relativ zu dem Chassis des Kraftfahrzeuges und das Messsignal ist ein Winkelsignal. Das Messsignal kann ferner ein analoges Signal oder ein digitales Signal sein.

Die erste Signalverarbeitungseinrichtung kann einen Prozessor zum Durchführen eines Coordinate Rotation Digital Computer (CORDIC) Algorithmus, wie einen CORDIC-Block, umfassen oder durch einen Prozessor zum Durchführen eines Coordinate Rotation Digital Computer (CORDIC) Algorithmus, wie einen CORDIC-Block, gebildet sein.

Die zweite Signalverarbeitungseinrichtung kann eine Nachbearbeitungseinrichtung, wie eine Post-Processing-Einrichtung, umfassen. Ferner kann die zweite Signalverarbeitungseinrichtung ausgebildet sein, das Messsignal zu filtern, beispielsweise mittels eines Tiefpassfilters oder eines Bandpassfilters.

Die dritte Signalverarbeitungseinrichtung kann einen Prozessor zum Berechnen der Änderungsrate umfassen. Beispielsweise ist die zeitlich veränderliche Messgröße der Winkel des Rades des Kraftfahrzeuges relativ zu dem Chassis des Kraftfahrzeuges und das Messsignal ist das Winkelsignal. Hierbei kann die Änderungsrate eine Geschwindigkeit, insbesondere eine Winkelgeschwindigkeit oder eine Radaufbau-Geschwindigkeit, und/oder eine Beschleunigung, insbesondere eine Radaufbau-Beschleunigung, des Rades des Kraftfahrzeuges sein. Ferner kann die dritte Signalverarbeitungseinrichtung ausgebildet sein, eine Berechnung der Geschwindigkeit durch Berechnung einer 1. Ableitung der berechneten zeitlich veränderlichen Messgröße und/oder eine Berechnung der Beschleunigung durch Berechnung einer 2. Ableitung der berechneten zeitlich veränderlichen Messgröße gemäß den Formeln

$$v = \Delta\alpha/\Delta t;$$

und

$$a = \Delta v/\Delta t;$$

durchzuführen, wobei $\Delta\alpha$ einen Unterschied zwischen zwei berechneten Messgrößen, $\Delta t$ eine Zeitdifferenz, v die Geschwindigkeit, a die Beschleunigung und $\Delta v$ einen Unterschied zwischen zwei berechneten Geschwindigkeiten bezeichnet. Beispielsweise entspricht die Zeitdifferenz $\Delta t$ einer Zeitdauer zwischen zwei Abtastwerten, welche bei einer synchronen Abtastung bekannt ist. Ferner kann die dritte Signalverarbeitungseinrichtung ausgebildet sein, eine aus der berechneten zeitlich veränderlichen Messgröße hergeleitete Funktion zu berechnen.

Die Kommunikationsschnittstelle kann eine drahtgebundene Kommunikationsschnittstelle und/oder eine drahtlose Kommunikationsschnittstelle zur Kommunikation über ein Kommunikationsnetzwerk umfassen. Beispielsweise umfasst die Kommunikationsschnittstelle eine serielle Schnittstelle, eine Schnittstelle nach dem Standard Peripheral Sensor Interface 5 (PSI5), eine Schnittstelle nach dem Standard Single Edge Nibble Transmission (SENT), eine Schnittstelle nach dem Standard Power Management Bus (PMBus), eine Schnittstelle nach dem Standard Universal Serial Bus (USB), eine Schnittelle zur drahtlosen Kommunikation mittels Radio-Frequency-Identification (RFID), beispielsweise nach dem Standard ISO/IEC 14443 oder ISO/IEC 18000-3, eine Schnittstelle zur drahtlosen Kommunikation mittels Near-Field-Communication (NFC), beispielsweise nach dem Standard ISO/IEC 14443 oder ISO/IEC 18092, oder eine Schnittstelle zur drahtlosen Kommunikation nach einem der Standards Bluetooth, ZigBee oder Wireless Local Area Network (W-LAN) . Ferner kann die Kommunikationsschnittstelle ein Digital Interface sein. Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Ferner kann die Kommunikationsschnittstelle zum Aussenden des zusammengesetzten Sendesignals an ein elektronisches Steuergerät, wie eine Electronic Control Unit (ECU), des Kraftfahrzeuges ausgebildet sein, in welchem das empfangene zusammengesetzte Sendesignal, welches ein Winkelsignal umfassen kann, weiter verarbeitet werden kann. Beispielsweise ist das elektronische Steuergerät eine Motorsteuerungseinheit, wie eine Engine Control Unit.

Erfindungsgemäß ist die Signalverarbeitungsvorrichtung in einem Sensor, insbesondere in einem Messsensor, integriert.

In einer vorteilhaften Ausführungsform sind die Messwerte Fahrwerkspositionswerte eines Fahrwerks des Kraftfahrzeugs oder Winkelmesswerte, welche auf die Fahrwerksposition des Fahrwerks des Kraftfahrzeugs hinweisen, oder Temperaturmesswerte. Dadurch wird der Vorteil erreicht, dass die Messwerte effizient erfasst werden können.

In einer weiteren vorteilhaften Ausführungsform umfasst die zeitlich veränderliche Messgröße als Messwerte aufeinanderfolgende Winkelmesswerte, wobei das Messsignal Sinuswerte und Cosinuswerte in Abhängigkeit der Winkelmesswerte umfasst, und wobei die erste Signalverarbeitungseinrichtung ausgebildet ist, die Winkelmesswerte aus den Sinuswerten und den Cosinuswerten zu berechnen. Dadurch wird der Vorteil erreicht, dass die zeitlich veränderliche Messgröße effizient berechnet werden kann.

In einer weiteren vorteilhaften Ausführungsform ist die erste Signalverarbeitungseinrichtung ausgebildet, den CORDIC-Algorithmus zur Berechnung der zeitlich veränderlichen Messgröße aus dem Messsignal zu implementieren. Dadurch wird der Vorteil erreicht, dass eine besonders kostengünstige und effiziente erste Signalverarbeitungseinrichtung verwendet werden kann.

In einer weiteren vorteilhaften Ausführungsform weist die zweite Signalverarbeitungseinrichtung eine Signalverarbeitungsverzögerung auf, und ist die zweite Signalverarbeitungseinrichtung ausgebildet, das Messsignal um die Signalverarbeitungsverzögerung zu verzögern, um die verarbeitete Messgröße zu erhalten. Dadurch wird der Vorteil erreicht, dass das zusammengesetzte Sendesignal besonders effizient mit einem weiteren Sendesignal synchronisiert werden kann.

In einer weiteren vorteilhaften Ausführungsform ist die zweite Signalverarbeitungseinrichtung ausgebildet, einen Maximalwert des Messsignals zu reduzieren oder durch Clamping zu verarbeiten oder zu filtern, insbesondere mittels einer Tiefpassfilterung oder einer Bandpassfilterung, oder das Messsignal durch eine Mittelwertbildung, insbesondere durch Bildung eines arithmetischen Mittelwertes aus zwei oder mehreren Messwerten, zu verarbeiten, um die verarbeitete Messgröße zu erhalten. Dadurch wird der Vorteil erreicht, dass die verarbeitete Messgröße effizient bestimmt werden kann.

In einer weiteren vorteilhaften Ausführungsform ist die dritte Signalverarbeitungseinrichtung ausgebildet, die Änderungsrate der zeitlich veränderlichen Messgröße durch eine Ableitung der veränderlichen Messgröße nach der Zeit, insbesondere durch Differenzbildung zwischen aufeinanderfolgenden Messwerten, zu berechnen, um einen Geschwindigkeitswert als Zusatzmesssignal zu erhalten. Dadurch wird der Vorteil erreicht, dass ein Geschwindigkeitssensor zum Erfassen des Geschwindigkeitswertes entfallen kann.

In einer weiteren vorteilhaften Ausführungsform ist die dritte Signalverarbeitungseinrichtung ausgebildet, die Änderungsrate der zeitlich veränderlichen Messgröße durch eine zweite Ableitung der veränderlichen Messgröße nach der Zeit zu berechnen, um einen Beschleunigungswert als Zusatzmesssignal zu erhalten. Dadurch wird der Vorteil erreicht, dass ein Beschleunigungssensor zum Erfassen des Beschleunigungswertes entfallen kann.

In einer weiteren vorteilhaften Ausführungsform stammt das Messsignal von einem Messsensor, und ist die Kommunikationsschnittstelle ferner ausgebildet, die verarbeitete Messgröße, das Zusatzmesssignal sowie Messsensorparameter, insbesondere Temperaturwerte, Offset-Werte oder Verstärkungswerte, zu dem zusammengesetzten Sendesignal zusammenzuführen und das zusammengesetzte Sendesignal auszusenden. Dadurch wird der Vorteil erreicht, dass der Messsensor effizient überwacht werden kann.

Der Messsensorparameter kann durch einen externen Beobachter, wie das elektronische Steuergerät, ausgewertet werden. Beispielsweise ist der externe Beobachter ausgebildet, frühzeitig einen instabilen Betriebszustand oder ein Aussetzen des Messsensors zu erkennen.

In einer weiteren vorteilhaften Ausführungsform ist die Kommunikationsschnittstelle eine PSI5- oder SENT-Kommunikationsschnittstelle oder bildet die Kommunikationsschnittstelle ein Digital Interface nach dem PSI5- oder SENT-Standard. Dadurch wird der Vorteil erreicht, dass eine effiziente Kommunikationsschnittstelle verwendet werden kann.

In einer weiteren vorteilhaften Ausführungsform ist die Kommunikationsschnittstelle ausgebildet, die verarbeitete Messgröße und das Zusatzmesssignal zu einem zusammengesetzten Sendesignal auf der Basis des PSI5- oder SENT- Protokolls zusammenzuführen, um das zusammengesetzte Sendesignal zu erhalten. Dadurch wird der Vorteil erreicht, dass das zusammengesetzte Sendesignal effizient bestimmt werden kann.

In einer weiteren vorteilhaften Ausführungsform ist das zusammengesetzte Sendesignal ein digitales Signal, und ist die Kommunikationsschnittstelle ausgebildet, das zusammengesetzte Sendesignal digitalanalog zu wandeln. Dadurch wird der Vorteil erreicht, dass das zusammengesetzte Sendesignal effizient ausgesendet werden kann.

In einer weiteren vorteilhaften Ausführungsform ist die Kommunikationsschnittstelle ausgebildet, das zusammengesetzte Sendesignal mittels TDMA auszusenden. Dadurch wird der Vorteil erreicht, dass ein zur Aussendung des zusammengesetzten Sendesignals verwendeter Sendekanal durch Verwendung von Time Division Multiple Access (TDMA) effizient genutzt werden kann.

In einer weiteren vorteilhaften Ausführungsform ist die Signalverarbeitungsvorrichtung ausgebildet mit einem Analog-Digital-Wandler, welcher der ersten Signalverarbeitungseinrichtung vorgeschaltet ist. Dadurch wird der Vorteil erreicht, dass ein analoges Messsignal effizient verarbeitet werden kann.

Erfindungsgemäß ist die Signalverarbeitungsvorrichtung ausgebildet mit einem Messsensor, insbesondere einem Winkelsensor, welcher der ersten Signalverarbeitungseinrichtung vorgeschaltet und ausgebildet ist, das Messsignal bereitzustellen. Dadurch wird der Vorteil erreicht, dass das Messsignal der ersten Signalverarbeitungseinrichtung effizient bereitgestellt werden kann.

Gemäß einem weiteren Aspekt der Erfindung wird die Aufgabe durch ein elektronisches Steuergerät zur Steuerung einer Funktion eines Kraftfahrzeugs auf der Basis einer Messgröße und einer Änderungsrate der Messgröße gelöst, mit: einer Kommunikationsschnittstelle, insbesondere einer PSI5- oder SENT-Kommunikationsschnittstelle, zum Empfangen eines zusammengesetzten Sendesignals, insbesondere von der Signalverarbeitungsvorrichtung; wobei das zusammengesetzte Sendesignal die Messgröße und die Änderungsrate der Messgröße umfasst; und wobei die Kommunikationsschnittstelle ausgebildet ist, die Messgröße und die Änderungsrate der Messgröße aus dem zusammengesetzten Signal zu extrahieren und getrennt auszugeben. Dadurch wird der Vorteil erreicht, dass das Sendesignal effizient verarbeitet werden kann. Das elektronische Steuergerät kann eine Motorsteuerungseinheit, wie eine Engine Control Unit, sein oder umfassen. Ferner kann die Funktion des Kraftfahrzeuges eine Motorfunktion sein.

Ausführungsbeispiele der Erfindung sind in den Zeichnungen dargestellt und werden im Folgenden näher beschrieben.

Es zeigen:

Fig. 1 eine schematische Darstellung einer Signalverarbeitungsvorrichtung;

Fig. 2 eine schematische Darstellung eines elektronischen Steuergerätes; und

Fig. 3 eine Anordnung zur Signalverarbeitung.

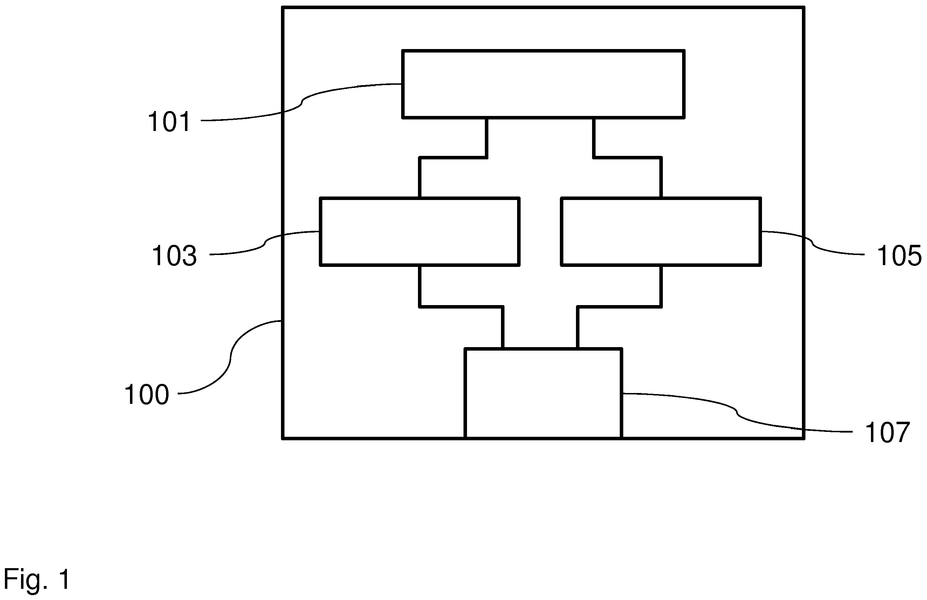

Fig. 1 zeigt eine schematische Darstellung einer Signalverarbeitungsvorrichtung 100. Die Signalverarbeitungsvorrichtung 100 umfasst eine erste Signalverarbeitungseinrichtung 101, eine zweite Signalverarbeitungseinrichtung 103, eine dritte Signalverarbeitungseinrichtung 105 und eine Kommunikationsschnittstelle 107.

Die Signalverarbeitungsvorrichtung 100 zur Verarbeitung eines Messsignals in einem Kraftfahrzeug, wobei das Messsignal eine zeitlich veränderliche Messgröße mit aufeinander folgenden Messwerten betrifft, kann ausgebildet sein mit: der ersten Signalverarbeitungseinrichtung 101 zum Berechnen der zeitlich veränderlichen Messgröße aus dem Messsignal; der zweiten Signalverarbeitungseinrichtung 103 zum Verarbeiten der zeitlich veränderlichen Messgröße, um eine verarbeitete Messgröße zu erhalten; der dritten Signalverarbeitungseinrichtung 105 zum Berechnen einer Änderungsrate der zeitlich veränderlichen Messgröße, wobei die dritte Signalverarbeitungseinrichtung 105 ausgebildet ist, ein Zusatzmesssignal, das die Änderungsrate anzeigt, auszugeben; und der Kommunikationsschnittstelle 107, welche ausgebildet ist, die verarbeitete Messgröße und das Zusatzmesssignal zu einem zusammengesetzten Sendesignal zusammenzuführen und das zusammengesetzte Sendesignal auszusenden.

Das Kraftfahrzeug kann eine Personenkraftwagen, ein Lastkraftwagen, ein Automobil oder ein Motorrad sein. Ferner kann das Kraftfahrzeug einen Messsensor aufweisen, mittels welchem das Messsignal bereitgestellt wird. Beispielsweise ist das Kraftfahrzeug mit einer aktiven Fahrwerksregelung, einer Niveauregulierung und/oder einer automatischen Leuchtweitenregulierung ausgebildet und der Messsensor ist ein Fahrwerkspositionssensor, wie ein Höhenstandsensor. Hierbei kann ein Gehäuse des Fahrwerkspositionssensors mit einem Chassis des Kraftfahrzeuges verbunden sein. Ferner kann eine Radaufhängung oder ein Rad des Kraftfahrzeuges über ein Gestänge mit einem Hebel des Fahrwerkspositionssensors verbunden sein. Hierdurch kann mittels des Fahrwerkspositionssensors eine Bewegung und/oder ein Winkel des Rades des Kraftfahrzeuges relativ zu dem Chassis des Kraftfahrzeuges erfasst werden. Beispielsweise ist die zeitlich veränderliche Messgröße der Winkel des Rades des Kraftfahrzeuges relativ zu dem Chassis des Kraftfahrzeuges und das Messsignal ist ein Winkelsignal. Das Messsignal kann ferner ein analoges Signal oder ein digitales Signal sein.

Die erste Signalverarbeitungseinrichtung 101 kann einen Prozessor zum Durchführen eines Coordinate Rotation Digital Computer (CORDIC) Algorithmus, wie einen CORDIC-Block, umfassen oder durch einen Prozessor zum Durchführen eines Coordinate Rotation Digital Computer (CORDIC) Algorithmus, wie einen CORDIC-Block, gebildet sein.

Die zweite Signalverarbeitungseinrichtung 103 kann eine Nachbearbeitungseinrichtung, wie eine Post-Processing-Einrichtung, umfassen. Ferner kann die zweite Signalverarbeitungseinrichtung 103 ausgebildet sein, das Messsignal zu filtern, beispielsweise mittels eines Tiefpassfilters oder eines Bandpassfilters.

Die dritte Signalverarbeitungseinrichtung 105 kann einen Prozessor zum Berechnen der Änderungsrate umfassen. Beispielsweise ist die zeitlich veränderliche Messgröße der Winkel des Rades des Kraftfahrzeuges relativ zu dem Chassis des Kraftfahrzeuges und das Messsignal ist das Winkelsignal. Hierbei kann die Änderungsrate eine Geschwindigkeit, insbesondere eine Winkelgeschwindigkeit oder eine Radaufbau-Geschwindigkeit, und/oder eine Beschleunigung, insbesondere eine Radaufbau-Beschleunigung, des Rades des Kraftfahrzeuges sein. Ferner kann die dritte Signalverarbeitungseinrichtung 105 ausgebildet sein, eine Berechnung der Geschwindigkeit durch Berechnung einer 1. Ableitung der berechneten zeitlich veränderlichen Messgröße und/oder eine Berechnung der Beschleunigung durch Berechnung einer 2. Ableitung der berechneten zeitlich veränderlichen Messgröße gemäß den Formeln

$$v = \Delta\alpha/\Delta t;$$

und

$$a = \Delta v/\Delta t;$$

durchzuführen, wobei $\Delta\alpha$ einen Unterschied zwischen zwei berechneten Messgrößen, $\Delta t$ eine Zeitdifferenz, v die Geschwindigkeit, a die Beschleunigung und $\Delta v$ einen Unterschied zwischen zwei berechneten Geschwindigkeiten bezeichnet. Beispielsweise entspricht die Zeitdifferenz $\Delta t$ einer Zeitdauer zwischen zwei Abtastwerten, welche bei einer synchronen Abtastung bekannt ist. Ferner kann die dritte Signalverarbeitungseinrichtung 105 ausgebildet sein, eine aus der berechneten zeitlich veränderlichen Messgröße hergeleitete Funktion zu berechnen.

Die Kommunikationsschnittstelle 107 kann eine drahtgebundene Kommunikationsschnittstelle und/oder eine drahtlose Kommunikationsschnittstelle zur Kommunikation über ein Kommunikationsnetzwerk umfassen. Beispielsweise umfasst die Kommunikationsschnittstelle 107 eine serielle Schnittstelle, eine Schnittstelle nach dem Standard Peripheral Sensor Interface 5 (PSI5), eine Schnittstelle nach dem Standard Single Edge Nibble Transmission (SENT), eine Schnittstelle nach dem Standard Power Management Bus (PMBus), eine Schnittstelle nach dem Standard Universal Serial Bus (USB), eine Schnittelle zur drahtlosen Kommunikation mittels Radio-Frequency-Identification (RFID), beispielsweise nach dem Standard ISO/IEC 14443 oder ISO/IEC 18000-3, eine Schnittstelle zur drahtlosen Kommunikation mittels Near-Field-Communication (NFC), beispielsweise nach dem Standard ISO/IEC 14443 oder ISO/IEC 18092, oder eine Schnittstelle zur drahtlosen Kommunikation nach einem der Standards Bluetooth, ZigBee oder Wireless Local Area Network (W-LAN). Ferner kann die Kommunikationsschnittstelle 107 ein Digital Interface sein. Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Ferner kann die Kommunikationsschnittstelle 107 zum Aussenden des zusammengesetzten Sendesignals an ein elektronisches Steuergerät, wie eine Electronic Control Unit (ECU), des Kraftfahrzeuges ausgebildet sein, in welchem das empfangene zusammengesetzte Sendesignal, welches ein Winkelsignal umfassen kann, weiter verarbeitet werden kann. Beispielsweise ist das elektronische Steuergerät eine Motorsteuerungseinheit, wie eine Engine Control Unit.

Erfindungsgemäß ist die Signalverarbeitungsvorrichtung 100 in einem Sensor, insbesondere in einem Messsensor, integriert.

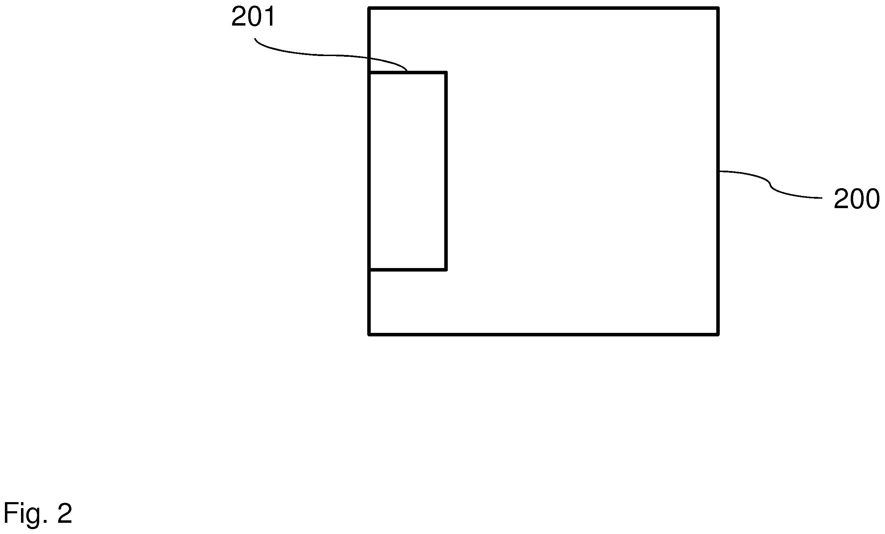

Fig. 2 zeigt eine schematische Darstellung eines elektronischen Steuergerätes 200. Das elektronische Steuergerät 200 umfasst eine Kommunikationsschnittstelle 201.

Das elektronische Steuergerät 200 zur Steuerung einer Funktion eines Kraftfahrzeugs auf der Basis einer Messgröße und einer Änderungsrate der Messgröße kann ausgebildet sein mit: der Kommunikationsschnittstelle 201, insbesondere einer PSI5- oder SENT-Kommunikationsschnittstelle, zum Empfangen eines zusammengesetzten Sendesignals, insbesondere von der Signalverarbeitungsvorrichtung 100; wobei das zusammengesetzte Sendesignal die Messgröße und die Änderungsrate der Messgröße umfasst; und wobei die Kommunikationsschnittstelle 201 ausgebildet ist, die Messgröße und die Änderungsrate der Messgröße aus dem zusammengesetzten Signal zu extrahieren und getrennt auszugeben. Das elektronische Steuergerät 200 kann eine Motorsteuerungseinheit, wie eine Engine Control Unit, sein oder umfassen. Ferner kann die Funktion des Kraftfahrzeuges eine Motorfunktion sein.

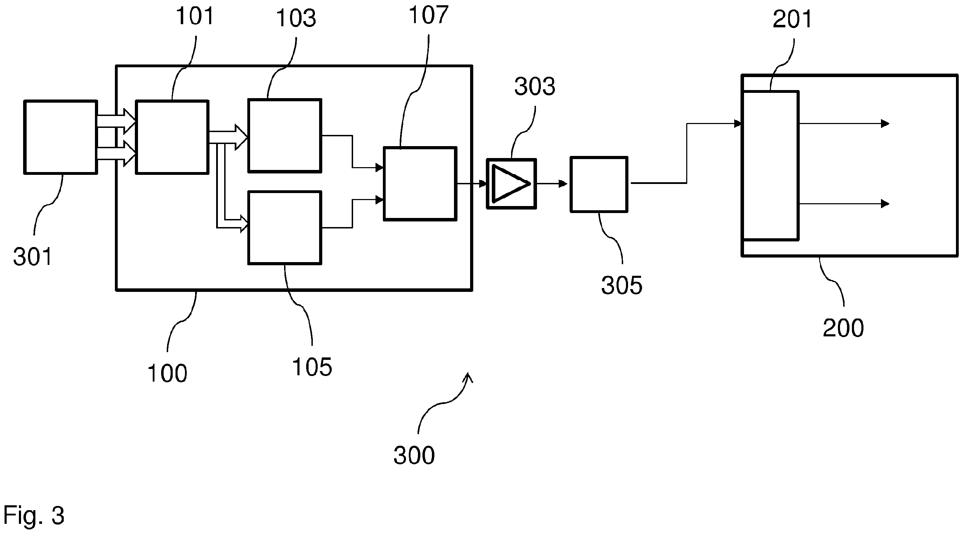

Fig. 3 zeigt eine Anordnung 300 zur Signalverarbeitung. Die Anordnung 300 umfasst einen Messsensor 301, die Signalverarbeitungseinrichtung 100, einen Treiber 303 zum Erzeugen einer Sensorausgabe 305 und das elektronische Steuergerät 200.

Der Messsensor 301 kann einen Transducer, ein analoges Frontend und/oder einen Analog-Digital-Wandler umfassen. Ferner kann der Messensor 301 ausgebildet sein, das Messsignal auszusenden, wobei die zeitlich veränderliche Messgröße als Messwerte aufeinanderfolgende Winkelmesswerte umfasst, und wobei das Messsignal Sinuswerte und Cosinuswerte in Abhängigkeit der Winkelmesswerte umfasst.

Die erste Signalverarbeitungseinrichtung 101 kann ausgebildet sein, das von dem Messsensor 301 empfangene Messsignal zu empfangen und mittels eines CORDIC-Algorithmus eine Winkelinformation, beispielsweise eine 14 Bit Winkelinformation $\alpha_{14}$, zu berechnen. Ferner kann die erste Signalverarbeitungseinrichtung 101 ausgebildet sein, die berechnete Winkelinformation an die zweite Signalverarbeitungseinrichtung 103 und die dritte Signalverarbeitungseinrichtung 105 zu übermitteln.

Die zweite Signalverarbeitungseinrichtung 103 kann ausgebildet sein, die Winkelinformation, insbesondere mittels eines Post-Processing-Verfahrens oder mittels Clamping, zu einer weiteren Winkelinformation, beispielsweise einer 12 Bit Winkelinformation $\alpha_{12}(t_0)$, wobei $t_0$ einen Zeitpunkt bezeichnet, zu verarbeiten und die weitere Winkelinformation an die Kommunikationsschnittstelle 107 zu übermitteln.

Die dritte Signalverarbeitungseinrichtung 105 kann ausgebildet sein, in Abhängigkeit von der Winkelinformation, insbesondere über eine Funktion $f(\alpha,t)$, eine Änderungsinformation, beispielsweise eine 12 Bit Änderungsinformation $f(\alpha_{14},t_0)$, zu bestimmen, wobei t eine Zeit und $t_0$ einen Zeitpunkt bezeichnet. Ferner kann die dritte Signalverarbeitungseinrichtung 105 ausgebildet sein, die Änderungsinformation an die Kommunikationsschnittstelle 107 zu übermitteln.

Die Kommunikationsschnittstelle 107 kann ausgebildet sein, die weitere Winkelinformation und die Änderungsinformation zusammenzuführen und an den Treiber 303 zu übermitteln.

Der Treiber 303 kann eine Treiberschaltung mit einem Verstärker umfassen. Ferner kann der Treiber 303 ein Driver sein. Der Treiber 303 kann ferner ausgebildet sein, die Sensorausgabe 305, welche die Informationen $\alpha_{12}(t_0)$ und $f(\alpha_{14},t_0)$ umfasst, zu erzeugen und an die Kommunikationsschnittstelle 201 des elektronischen Steuergerätes 200 zu übermitteln.

Die Kommunikationsschnittstelle 201 kann ausgebildet sein, die Informationen $\alpha_{12}(t_0)$ und $f(\alpha_{14},t_0)$ aus der Sensorausgabe 305 zu extrahieren und getrennt auszugeben.

Erfindungsgemäß ist der Messsensor 301 in einer anwendungsspezifischen integrierten Schaltung, wie in einem Application Specific Integrated Circuit (ASIC), integriert. Durch die Verarbeitung des Messsignals in der Signalverarbeitungsvorrichtung 100 kann das Messsignal, beispielsweise als ein hochaufgelöstes ein 14 Bit Messsignal, verarbeitet werden. Dadurch kann eine Verarbeitung des Messsignals störsicher, hoch aufgelöst und schnell durchgeführt werden.

Gemäß einer weiteren Ausführungsform kann das Messsignal ferner mittels eines Digital-Analog-Wandlers, beispielsweise eines 12 Bit Digital-Analog-Wandlers, aus dem Messsensor 301 nach außen gegeben oder an einen Empfänger übertragen werden.

Gemäß einer weiteren Ausführungsform kann der Messsensor 301 ausgebildet sein, eine Winkelberechnung auf der Basis eines Sin/Cos-Verfahrens durchzuführen. Hierbei kann ein analoges Messsignal des Messsensors 301 hochauflösend, insbesondere mit 14 Bit, abgetastet und als Digitalwert bereitgestellt werden.

Gemäß einer weiteren Ausführungsform können bei einer Filterung des Messsignals zu einer sicheren Übertragung des Messsignals nach außen Verzögerungen und Einschränkungen des Frequenzbereiches entstehen.

Gemäß einer weiteren Ausführungsform können dem elektronischen Steuergerät 200 mittels des zusammengesetzten Signals zeitgleich verschiedene Messsignale zur Verfügung bereitgestellt werden.

Gemäß einer weiteren Ausführungsform können die verschiedenen Messsignale zumindest teilweise von einem weiteren elektronischen Steuergerät, wie einem externen elektronischen Steuergerät, aus dem Messsignal berechnet werden.

Bezugszeichenliste

100    Signalverarbeitungsvorrichtung
101    Erste Signalverarbeitungseinrichtung
103    Zweite Signalverarbeitungseinrichtung
105    Dritte Signalverarbeitungseinrichtung
107    Kommunikationsschnittstelle

200    Elektronisches Steuergerät
201    Kommunikationsschnittstelle

300    Anordnung
301    Messsensor
303    Treiber
305    Sensorausgabe

**Patentansprüche**

1.   Signalverarbeitungsvorrichtung (100) zur Verarbeitung eines Messsignals in einem Kraftfahrzeug, wobei das Messsignal eine zeitlich veränderliche Messgröße mit aufeinander folgenden Messwerten betrifft, wobei die Signalverarbeitungsvorrichtung ausgebildet ist mit einem integrierten Messsensor, insbesondere einem Winkelsensor, umfassend:

eine erste Signalverarbeitungseinrichtung (101) zum Berechnen der zeitlich veränderlichen Messgröße aus dem Messsignal, wobei der Messsensor der ersten Signalverarbeitungseinrichtung vorgeschaltet und ausgebildet ist, das Messsignal bereitzustellen;
eine zweite Signalverarbeitungseinrichtung (103) zum Verarbeiten der zeitlich veränderlichen Messgröße, um eine verarbeitete Messgröße zu erhalten;
eine dritte Signalverarbeitungseinrichtung (105) zum Berechnen einer Änderungsrate der zeitlich veränderlichen Messgröße, wobei die dritte Signalverarbeitungseinrichtung (105) ausgebildet ist, ein Zusatzmesssignal, das die Änderungsrate anzeigt, auszugeben; und
eine Kommunikationsschnittstelle (107), welche ausgebildet ist, die verarbeitete Messgröße und das Zusatzmesssignal zu einem zusammengesetzten Sendesignal zusammenzuführen und das zusammengesetzte Sendesignal auszusenden.

2.   Signalverarbeitungsvorrichtung (100) nach Anspruch 1, wobei die Messwerte Fahrwerkspositionswerte eines Fahrwerks des Kraftfahrzeugs oder Winkelmesswerte, welche auf die Fahrwerksposition des Fahrwerks des Kraftfahrzeugs hinweisen, oder Temperaturmesswerte sind.

3.   Signalverarbeitungsvorrichtung (100) nach Anspruch 1 oder 2, wobei die zeitlich veränderliche Messgröße als Messwerte aufeinanderfolgende Winkelmesswerte umfasst, wobei das Messsignal Sinuswerte und Cosinuswerte in Abhängigkeit der Winkelmesswerte umfasst, und wobei die erste Signalverarbeitungseinrichtung (101) ausgebildet ist, die Winkelmesswerte aus den Sinuswerten und den Cosinuswerten zu berechnen.

4.   Signalverarbeitungsvorrichtung (100) nach einem der vorangehenden Ansprüche, wobei die erste Signalverarbeitungseinrichtung (101) ausgebildet ist, den CORDIC-Algorithmus zur Berechnung der zeitlich veränderlichen Messgröße aus dem Messsignal zu implementieren.

5.   Signalverarbeitungsvorrichtung (100) nach einem der vorangehenden Ansprüche, wobei die zweite Signalverarbeitungseinrichtung (103) eine Signalverarbeitungsverzögerung aufweist, und wobei die zweite Signalverarbeitungseinrichtung (103) ausgebildet ist, das Messsignal um die Signalverarbeitungsverzögerung zu verzögern, um die verarbeitete Messgröße zu erhalten.

6.   Signalverarbeitungsvorrichtung (100) nach einem der vorangehenden Ansprüche, wobei die zweite Signalverarbeitungseinrichtung (103) ausgebildet ist, einen Maximalwert des Messsignals zu reduzieren oder durch Clamping zu verarbeiten oder zu filtern, insbesondere mittels einer Tiefpassfilterung oder einer Bandpassfilterung, oder das Messsignal durch eine Mittelwertbildung, insbesondere durch Bildung eines arithmetischen Mittelwertes aus zwei oder mehreren Messwerten, zu verarbeiten, um die verarbeitete Messgröße zu erhalten.

7.   Signalverarbeitungsvorrichtung (100) nach einem der vorangehenden Ansprüche, wobei die dritte Signalverarbeitungseinrichtung (105) ausgebildet ist, die Änderungsrate der zeitlich veränderlichen Messgröße durch eine Ableitung der veränderlichen Messgröße nach der Zeit, insbesondere durch Differenzbildung zwischen aufeinanderfolgenden Messwerten, zu berechnen, um einen Geschwindigkeitswert als Zusatzmesssignal zu erhalten.

8.   Signalverarbeitungsvorrichtung (100) nach einem der vorangehenden Ansprüche, wobei die dritte Signalverarbeitungseinrichtung (105) ausgebildet ist, die Änderungsrate der zeitlich veränderlichen Messgröße durch eine zweite Ableitung der veränderlichen Messgröße nach der Zeit zu berechnen, um einen Beschleunigungswert als Zusatzmesssignal zu erhalten.

9. Signalverarbeitungsvorrichtung (100) nach einem der vorangehenden Ansprüche, wobei das Messsignal von einem Messsensor (301) stammt, und wobei die Kommunikationsschnittstelle (107) ferner ausgebildet ist, die verarbeitete Messgröße, das Zusatzmesssignal sowie Messsensorparameter, insbesondere Temperaturwerte, Offset-Werte oder Verstärkungswerte, zu dem zusammengesetzten Sendesignal zusammenzuführen und das zusammengesetzte Sendesignal auszusenden.

10. Signalverarbeitungsvorrichtung (100) nach einem der vorangehenden Ansprüche, wobei die Kommunikationsschnittstelle (107) eine PSI5- oder SENT-Kommunikationsschnittstelle ist oder ein Digital Interface nach dem PSI5- oder SENT-Standard bildet.

11. Signalverarbeitungsvorrichtung (100) nach einem der vorangehenden Ansprüche, wobei die Kommunikationsschnittstelle (107) ausgebildet ist, die verarbeitete Messgröße und das Zusatzmesssignal zu einem zusammengesetzten Sendesignal auf der Basis des PSI5- oder SENT- Protokolls zusammenzuführen, um das zusammengesetzte Sendesignal zu erhalten.

12. Signalverarbeitungsvorrichtung (100) nach einem der vorangehenden Ansprüche, wobei das zusammengesetzte Sendesignal ein digitales Signal ist, und wobei die Kommunikationsschnittstelle (107) ausgebildet ist, das zusammengesetzte Sendesignal digital-analog zu wandeln.

13. Signalverarbeitungsvorrichtung (100) nach einem der vorangehenden Ansprüche, wobei die Kommunikationsschnittstelle (107) ausgebildet ist, das zusammengesetzte Sendesignal mittels TDMA auszusenden.

14. Signalverarbeitungsvorrichtung (100) nach einem der vorangehenden Ansprüche, mit einem Messsensor (301), insbesondere einem Winkelsensor, welcher der ersten Signalverarbeitungseinrichtung (101) vorgeschaltet und ausgebildet ist, das Messsignal bereitzustellen.

15. Elektronisches Steuergerät (200) zur Steuerung einer Funktion eines Kraftfahrzeugs auf der Basis einer Messgröße und einer Änderungsrate der Messgröße, mit:

einer Kommunikationsschnittstelle (201), insbesondere einer PSI5- oder SENT-Kommunikationsschnittstelle, zum Empfangen eines zusammengesetzten Sendesignals von der Signalverarbeitungsvorrichtung (100) gemäß einem der Ansprüche 1 bis 14; wobei das zusammengesetzte Sendesignal die Messgröße und die Änderungsrate der Messgröße umfasst; und wobei die Kommunikationsschnittstelle (201) ausgebildet ist, die Messgröße und die Änderungsrate der Messgröße aus dem zusammengesetzten Signal zu extrahieren und getrennt auszugeben.

## Claims

1. Signal processing apparatus (100) for processing a measurement signal in a motor vehicle, wherein the measurement signal relates to a time-variant measured variable having successive measured values, wherein the signal processing apparatus is designed with an integrated measurement sensor, particularly an angle sensor, comprising:

a first signal processing device (101) for computing the time-variant measured variable from the measurement signal, wherein the measurement sensor is connected upstream of the first signal processing device and is designed to provide the measurement signal; a second signal processing device (103) for processing the time-variant measured variable in order to obtain a processed measured variable; a third signal processing device (105) for computing a rate of change of the time-variant measured variable, wherein the third signal processing device (105) is designed to output a supplementary measurement signal that indicates the rate of change; and a communication interface (107) that is designed to combine the processed measured variable and the supplementary measurement signal to form a compiled transmission signal and to transmit the compiled transmission signal.

2. Signal processing apparatus (100) according to Claim 1, wherein the measured values are chassis position values of a chassis of the motor vehicle or angle measured values, which refer to the chassis position of the chassis of the motor vehicle, or temperature measured values.

3. Signal processing apparatus (100) according to Claim 1 or 2, wherein the time-variant measured variable comprises successive angle measured values as measured values, wherein the measurement signal comprises sine values and cosine values as a function of the angle measured values, and wherein the first signal processing device (101) is designed to compute the angle measured values from the sine values and the cosine values.

4. Signal processing apparatus (100) according to one of the preceding claims, wherein the first signal processing device (101) is designed to implement the CORDIC algorithm for computing the time-variant measured variable from the measurement signal.

5. Signal processing apparatus (100) according to one of the preceding claims, wherein the second signal processing device (103) has a signal processing delay, and wherein the second signal processing device (103) is designed to delay the measurement signal by the signal processing delay in order to obtain the processed measured variable.

6. Signal processing apparatus (100) according to one of the preceding claims, wherein the second signal processing device (103) is designed to reduce a maximum value of the measurement signal or to use clamping to process it or to filter it, particularly by means of low-pass filtering or bandpass filtering, or to process the measurement signal by means of mean value formation, particularly by forming an arithmetic mean value from two or more measured values, in order to obtain the processed measured variable.

7. Signal processing apparatus (100) according to one of the preceding claims, wherein the third signal processing device (105) is designed to compute the rate of change of the time-variant measured variable by means of a derivation of the variant measured variable with respect to time, particularly by forming a difference between successive measured values, in order to obtain a speed value as supplementary measurement signal.

8. Signal processing apparatus (100) according to one of the preceding claims, wherein the third signal processing device (105) is designed to compute the rate of change of the time-variant measured variable by means of a second derivation of the variant measured variable with respect to time, in order to obtain an acceleration value as supplementary measurement signal.

9. Signal processing apparatus (100) according to one of the preceding claims, wherein the measurement signal comes from a measurement sensor (301), and wherein the communication interface (107) is further designed to combine the processed measured variable, the supplementary measurement signal and measurement sensor parameters, particularly temperature values, offset values or gain values, to form the compiled transmission signal and to transmit the compiled transmission signal.

10. Signal processing apparatus (100) according to one of the preceding claims, wherein the communication interface (107) is a PSI5 or SENT communication interface or forms a digital interface based on the PSI5 or SENT standard.

11. The signal processing apparatus (100) according to one of the preceding claims, wherein the communication interface (107) is designed to combine the processed measured variable and the supplementary measurement signal to form a compiled transmission signal on the basis of the PSI5 or SENT protocol in order to obtain the compiled transmission signal.

12. The signal processing apparatus (100) according to one of the preceding claims, wherein the compiled transmission signal is a digital signal, and wherein the communication interface (107) is designed to subject the compiled transmission signal to digital-to-analog conversion.

13. Signal processing apparatus (100) according to one of the preceding claims, wherein the communication interface (107) is designed to transmit the compiled transmission signal by means of TDMA.

14. Signal processing apparatus (100) according to one of the preceding claims, having a measurement sensor (301), particularly an angle sensor, that is connected upstream of the first signal processing device (101) and is designed to provide the measurement signal.

15. Electronic controller (200) for controlling a function of a motor vehicle on the basis of a measured variable and a rate of change of the measured variable, having:

   a communication interface (201), particularly a PSI5 or SENT communication interface, for receiving a compiled transmission signal from the signal processing apparatus (100) according to one of Claims 1 to 14;
   wherein the compiled transmission signal comprises the measured variable and the rate of change of the measured variable; and
   wherein the communication interface (201) is designed to extract the measured variable and the rate of change of the measured variable from the compiled signal and to output them separately.

**Revendications**

1. Dispositif de traitement de signal (100) destiné à traiter un signal de mesure dans un véhicule automobile, le signal de mesure se rapportant à une grandeur de mesure variable dans le temps et qui présente des valeurs de mesure successives, le dispositif de traitement de signal étant conçu avec un capteur de mesure intégré, en particulier un capteur d'angle, et comprenant :

un premier moyen de traitement de signal (101) destiné à calculer la grandeur de mesure variable dans le temps à partir du signal de mesure, le capteur de mesure étant monté en amont du premier moyen de traitement de signal et conçu pour produire le signal de mesure ; un deuxième moyen de traitement de signal (103) destiné à traiter la grandeur de mesure variable dans le temps afin d'obtenir une grandeur de mesure traitée ; un troisième moyen de traitement de signal (105) destiné à calculer un taux de variation de la grandeur de mesure variable dans le temps, le troisième moyen de traitement de signal (105) étant adapté pour délivrer un signal de mesure supplémentaire qui indique le taux de variation ; et une interface de communication (107) qui est conçue pour réunir la grandeur de mesure traitée et le signal de mesure supplémentaire en un signal d'émission composite et pour émettre le signal d'émission composite.

2. Dispositif de traitement de signal (100) selon la revendication 1, les valeurs de mesure étant des valeurs de position d'un mécanisme de roulement du véhicule automobile ou des valeurs de mesure d'angle basées sur la position du mécanisme de roulement du véhicule ou des valeurs de mesure de température.

3. Dispositif de traitement de signal (100) selon la revendication 1 ou 2, la grandeur de mesure variable dans le temps comprenant comme valeurs de mesure des valeurs d'angle successives, le signal de mesure comprenant des valeurs de sinus et des valeurs de cosinus en fonction des valeurs de mesure d'angle, et le premier moyen de traitement de signal (101) étant conçu pour calculer les valeurs de sinus et les valeurs de cosinus.

4. Dispositif de traitement de signal (100) selon l'une des revendications précédentes, le premier moyen de traitement de signal (101) étant conçu pour mettre en oeuvre l'algorithme CORDIC destiné à calculer la grandeur de mesure variable dans le temps à partir du signal de mesure.

5. Dispositif de traitement de signal (100) selon la revendication 1, le deuxième moyen de traitement de signal (103) présentant un retard de traitement de signal et le deuxième moyen de traitement de signal (103) étant conçu pour retarder le signal de mesure du retard de traitement de signal afin d'obtenir la grandeur de mesure traitée.

6. Dispositif de traitement de signal (100) selon l'une des revendications précédentes, le deuxième moyen de traitement de signal (103) étant adapté pour réduire une valeur maximale du signal de mesure ou pour la traiter par blocage ou la filtrer, notamment par filtrage passe-bas ou filtrage passe-bande, ou pour traiter le signal de mesure par formation de la valeur moyenne, en particulier par formation d'une valeur moyenne arithmétique à partir d'au moins deux valeurs de mesure afin d'obtenir la grandeur de mesure traitée.

7. Dispositif de traitement de signal (100) selon l'une des revendications précédentes, le troisième moyen de traitement de signal (105) étant conçu pour calculer le taux de variation de la grandeur de mesure variable dans le temps par dérivation de la grandeur de mesure variable après le temps, notamment par formation d'une différence entre des valeurs de mesure successives afin d'obtenir une valeur de vitesse comme signal de mesure supplémentaire.

8. Dispositif de traitement de signal (100) selon l'une des revendications précédentes, le troisième moyen de traitement de signal (105) étant adapté pour calculer le taux de variation de la grandeur de mesure variable dans le temps par une seconde dérivation de la grandeur de mesure variable dans le temps afin d'obtenir une valeur d'accélération comme signal de mesure supplémentaire.

9. Dispositif de traitement de signal (100) selon l'une des revendications précédentes, le signal de mesure provenant d'un capteur de mesure (301), et l'interface de communication (107) étant en outre conçue pour réunir la grandeur de mesure traitée, le signal de mesure supplémentaire et des paramètres de capteur de mesure, en particulier des valeurs de température, des valeurs de décalage ou des valeurs de gain, en le signal d'émission composite et émettre le signal d'émission composite.

10. Dispositif de traitement de signal (100) selon l'une des revendications précédentes, l'interface de communication (107) étant une interface de communication PSI5 ou SENT ou formant une interface numérique selon la norme PSI5 ou SENT.

11. Dispositif de traitement de signal (100) selon l'une des revendications précédentes, l'interface de communication (107) étant conçue pour réunir la grandeur de mesure traitée et le signal de mesure supplémentaire en un signal d'émission composite sur la base du protocole PSI5 ou SENT afin d'obtenir le signal d'émission composite.

**12.** Dispositif de traitement de signal (100) selon l'une des revendications précédentes, le signal d'émission composite étant un signal numérique, et l'interface de communication (107) étant conçue pour effectuer une conversion numérique-analogique du signal d'émission composite.

**13.** Dispositif de traitement de signal (100) selon l'une des revendications précédentes, l'interface de communication (107) étant conçue pour émettre le signal d'émission composite au moyen de la TDMA.

**14.** Dispositif de traitement de signal (100) selon l'une des revendications précédentes, comprenant un capteur de mesure (301), en particulier un capteur d'angle, qui est monté en amont du premier moyen de traitement de signal (101) et qui est conçu pour produire le signal de mesure.

**15.** Unité de commande électronique (200) destinée à commander une fonction d'un véhicule à moteur sur la base d'une grandeur de mesure et d'un taux de variation de la grandeur de mesure, l'unité de commande électronique comprenant :

une interface de communication (201), en particulier une interface de communication PSI5 ou SENT, destinée à recevoir un signal d'émission composite du moyen de traitement de signal (100) selon l'une des revendications 1 à 14 ; le signal d'émission composite comprenant la grandeur de mesure et le taux de variation de la grandeur de mesure ; et l'interface de communication (201) étant conçue pour extraire la grandeur de mesure et le taux de variation de la grandeur de mesure du signal composite et pour les délivrer séparément.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009048736 A1
- US 2012210791 A1